# EUROPEAN PATENT APPLICATION

(11) **EP 4 432 027 A1**
(43) Date of publication of application: **18.09.2024**
(21) Application number: 23161443.9
(22) Date of filing: 13.03.2023
(51) Int. Cl.: G05B 19/418, G05B 17/02

(54) **METHOD FOR ASSISTING AN ENERGY CONSUMPTION OPTIMIZATION OF AN INDUSTRIAL PLANT SITE**

(71) Applicant: BASF SE, 67056 Ludwigshafen am Rhein (DE)
(72) Inventor: Beckert, Verena, 524002 Zhanjiang (CN); Engel, Daniel, 67061 Ludwigshafen am Rhein (DE); Becker, Markus Bernhardt, 67061 Ludwigshafen am Rhein (DE); Pack, Robert, 67061 Ludwigshafen am Rhein (DE); Arcos-Diaz, Dario, 67061 Ludwigshafen am Rhein (DE)
(74) Representative: Eisenführ Speiser

(57) **Abstract**

The invention refers to a method 200 for assisting an energy consumption optimization of an industrial plant site. Data is received 210 from sensors, wherein the data comprises a tag identifying a sensor and measurements performed by the sensor. A graph database model is received 220 associated with the industrial plant site. The graph database plant model is formed by a graph database comprising operation nodes related to operation assets, transport nodes related to a mass transport and sensor nodes related to sensors. The edges of the graph database are indicative of the relation between the different nodes. A waste heat and/or heat sink potential is determined 230 for a part of the industrial plant site based on the graph database plant model and the data of the sensors. Control signals are provided 240 based on the waste heat and/or heat sink potential.

## Description

### FIELD OF THE INVENTION

The invention relates to a method, an apparatus and a computer program product for assisting an energy consumption optimization of an industrial plant site. Further, the invention relates to a use of the method, apparatus and computer program product for assisting an energy consumption optimization of an industrial plant site.

### BACKGROUND OF THE INVENTION

The EU has committed to a reduction of greenhouse gas emissions by 55% until 2030. Thereby, increasing energy efficiency is a key lever to reduce emissions, since more than 50% of emissions originate from energy consumption. In the chemical industries, about 28% of industrial and 10% of overall final energy is consumed globally. As a result, increasing energy efficiency by reutilizing otherwise wasted energy in the form of heat bears high potential for meeting global sustainability targets.

### SUMMARY OF THE INVENTION

It is an object of the present invention to provide a method, an apparatus and a computer program product that allow for an automatic, objective and technical resource conserving assisting in the optimization of an energy consumption of an industrial plant site, in particular, a large scale chemical industrial plant site. Through the utilization of waste heat, energy that would otherwise be lost to the environment is reintegrated as an energy source into the production process and thus reduces the overall energy consumption of a production process. Generally, since waste heat is typically at lower temperature levels, it is worth less than the high-exergy enthalpy flows, for instance, used for stream generation. However, the demand for lower temperature entropy flows for heating cooler process streams is immense. Moreover, the application of industrial scale heat pumps can facilitate the heat integration measures with the support of electrical power. Thus, finding waste heat sources and optionally also heat sinks and reintegrating the heat sources, for instance, with the found heat sinks, allows for a strong reduction of the energy consumption of an industrial plant.

However, such an energy optimization of large production sites, in particular, large chemical production sites, is often inefficient, time-consuming, and does not lead to the expected outcome. One reason for this is that at large chemical production sites it is often unknown where the waste heat is really emitted and where potential heat sinks could be found that could profit from respective waste heat. Moreover, for an energy optimization process, it would not only be advantageous if the location of a respective waste heat source is known but also if the heat flow magnitude and the respective temperature level of the respective waste heat location would be known. At present, this data can only be provided by a time-consuming manual work, for instance, by questioning respective plant personnel and gathering the data from these questionnaires.

Thus, optimizing the energy consumption of a complex large scale industrial plant is still a challenging task. It would therefore be advantageous if an automated, objective and technical resource conserving possibility for optimizing an energy consumption of an industrial plant could be provided.

Utilizing a graph database plant model for determining a waste heat and/or heat sink potential of an industrial plant site, allows knowledge on the processes in the industrial plant site, the hardware of the industrial plant site, etc. that are naturally integrated into the graph database plant model to be easily utilized in order to determine if at least a part of an industrial plant site has a waste heat and/or heat sink potential. Thus, an energy consumption of an industrial plant site can be optimized based on such determined waste heat and/or heat sink potentials in a fast and resource conserving manner.

In a first aspect of the present invention, a computer implemented method is presented for assisting an energy consumption optimization of an industrial plant site, wherein the industrial plant site comprises a plurality of sensors comprising mass flow and temperature sensors providing time series data, wherein the method comprises a) receiving time series data from the plurality of sensors, wherein the time series data of a sensor comprises a tag identifying the sensor and a time sequence of measurements performed by the sensor, b) receiving a graph database plant model associated with the industrial plant site, wherein the graph database plant model is formed by a graph database comprising operation nodes related to operation assets of the industrial plant site, transport nodes related to a mass transport between operation assets and sensor nodes related to sensors of the industrial plant site, wherein the edges of the graph database are indicative of the relation between the different nodes of a graph database model, c) determining a waste heat and/or heat sink potential for at least a part of the industrial plant site based on the graph database plant model and the time series data of the sensors, and d) providing control signals based on the waste heat and/or heat sink potential for optimizing an energy consumption of the industrial plant.

The method refers to a computer implemented method and thus can be performed by a general or dedicated computer adapted to perform the method, for instance, by executing a respective computer program. The method is configured for assisting an energy consumption optimization of an industrial plant site, preferably, a chemical industrial plant site for producing one or more chemical products. In particular, the assisting can refer to the localizing and analyzing of potential waste heat sources and/or heat sinks such that an optimization of the energy consumption can be performed by utilizing the respective localized and analyzed heat sources and/or heat sinks of the industrial plant site.

Generally, the industrial plant site comprises a plurality of sensors that provide time series data. Preferably, the plurality of sensors comprise mass flow and temperature sensors. However, also other sensors can be utilized, for instance, pressure sensors, CO₂ sensors, oxygen sensors, particle sensors, etc. that are indicative of the processes performed at a respective structure, for example, an operation asset, of the industrial plant site. Generally, time series data comprise time-dependent data values that refer to measurements of a sensor provided in the industrial plant, for instance, for monitoring a production process of the industrial plant. Accordingly, time series data can also be regarded as control data utilized for monitoring and controlling an industrial plant. Further, the time series data can be associated with a tag, wherein the tag can be indicative of an identity of the sensor of the industrial plant that has provided the respective time-dependent data values. For example, a time series data provided by a temperature sensor can refer to a time series of temperature measurements provided by the temperature sensor, for instance, in a chemical reactor during the production of a specific product. The temperature sensor can be, for instance, adapted to provide a temperature measurement every few seconds that is stored as time series data in association with the respective tag indicative of the identity of the temperature sensor in a respective storage. Further, the time series data can comprise, in addition to the time-dependent data values, also time stamps associated with the time-dependent data values to indicate the time at which the time-dependent data values have been measured. However, the time stamps can also be omitted and for example a time difference between to measurements can be stored or a general construction of the sensor can indicate that the measurements are always performed in the same timely sequence. Without limiting the generality or scope of the present teachings, the time series data can refer to an in order insert time series data that is defined by the most recently inserted, i.e. stored, time-dependent data value associated with the time series data being the time-dependent data value associated with the most recent time stamp compared with all other time stamps associated with already stored time-dependent data values. Thus, an in order insert time series data can be regarded as referring to a time series data set in which all time-dependent data values are stored subsequently, i.e. in order of the associated time stamps. However, also other possibilities for storing the time series data can be utilized.

In a first step, time series data from the plurality of sensors at the industrial plant site is received. For example, the time series data of the plurality of sensors can be stored on a data storage, for instance, a data archive, and the receiving can comprise accessing the respective data storage and reading out the time series data of the plurality of sensors. However, the receiving can also comprise receiving the time series data via a time series data interface that provides the time series data, for instance, from a respective data storage, directly from the sensors, or also from an input unit into which a user can, for instance, indicate the time series data to be received. The time series data of a sensor comprises time series data and/or descriptive data. As already described above, the time series data comprises measurements, in particular, measurement values, performed by the sensor. Additionally, the time series data can comprise, as also already described above, time stamps indicating the time at which the measurements have been taken. Further the time series data can be associated with or comprise a tag indicative of an identity of the sensor.

In a further step, the method comprises receiving a graph database plant model associated with the industrial plant site. The graph database plant model is formed by a graph database. Generally, a graph database is a database that uses graph structures with nodes, edges and properties to represent and store data, wherein data items are stored related to the collection of nodes and edges of the graph database. In this context, edges of the graph database represent a relationship between nodes connected by the respective edges. Nodes represent items of interest for which respective relations are tracked by the graph database. Moreover, properties refer to information related to a respective node item. Thus, a graph database does not only allow to store data items but also to store relationships between the data items and properties of the data items such that the data is linked together in a context sensitive way such that respective complex data structures can be visualized and queried. In an embodiment, at least some nodes of the graph database are referred to as operation nodes and are related to operation assets of the industrial plant site. For example, an operation node can simply indicate the presence of a specific operation asset performing a specific process at the industrial plant site, for instance, an operation asset can be indicative of the presence of a mixer and a certain location in the industrial plant site. However, also more than one node can be indicative of one operation asset in the industrial plant site, for example, if the operation asset comprises different parts that can also be operated independent of each other. For example, an operation asset can comprise not only a mixer, but also a heater and a mill, wherein all of these hardware units can be operated independent of each other but are used to perform the same overall process at the industrial plant site. However, if performing the same process in an industrial plant site, respective hardware units can also be indicated as the same node in the graph database, for instance, the mixer, the heater and the mill can also be indicated as one operation asset performing a specific mixing process in the industrial plant site at only one node. Further, the graph database can comprise nodes referred to as transport nodes that are related to a mass transport between operation assets. At the transport nodes, data items are stored that refer to a transport of a substance, i.e. a mass transport, between respective operation assets of the industrial plant site. For example, if a fluid is transported from a mixer after mixing to a heater for heating the fluid, a transport node is provided in the graph database indicating the mass transport between the two operation assets. For example, at mass transport nodes information on the mass transport can be stored like a mass flow, the kind of substance transported, a flow direction, etc. Further, the graph database can comprises nodes referred to as sensor nodes that are related to sensors of the industrial plant site. For example, the sensor nodes can store information on a sensor measuring a temperature of a heater at the industrial plant site. The information can refer to the kind of sensor, the location of the sensor, the kinds of measurements performed, a timing of measurements performed, an identity of the sensor, etc. In particular, time series data of the sensors can be stored in relation to the sensor nodes. However, based on an identity of the sensor stored at the sensor node, the respective time series data can also be accessed if stored on another database independent of the graph database. Further, the edges of the graph database are utilized to indicate the relation between the different nodes of the graph database model. For example, if a substance is transported from one operation asset to another operation asset, a first edge will be provided between the first operation node indicative of the first operation asset and the transport node indicative of the mass transport and then a second edge will be provided between the transport node indicative of the mass transport and the second operation node indicative of the second operation asset. Moreover, if a sensor measures one or more quantities related to an operation asset, a respective edge is provided between the respective operation asset and the respective sensor. Also, if a sensor measures one or more quantities during a mass transport, for instance, during a fluid flowing from one operation asset to another operation asset, an edge is provided between the respective sensor and the respective transport node. Thus, the graph database comprises and structures the knowledge available about the industrial plant site and the processes performed in the industrial plant site. In particular, the advantage of the graph database is that not only the data is stored but also the relation of the data is available and is indicative of the structure of the industrial plant site and all relations between the hardware of the industrial plant site.

Generally, a graph database plant model associated with the industrial plant site can be created utilizing known graph database creation models and utilizing respective knowledge about the industrial plant site. This knowledge can stem, for instance, from operators of the industrial plant site inputting their knowledge into the graph database plant model but also from construction information, maintenance information, installation information, process information, blueprints, etc. For utilizing the graph database plant model is preferably already generated and stored on a respective storage unit such that it can be utilized for a plurality of applications. The receiving of the graph database plant model can then refer to accessing the storage on which the graph database plant model is already stored and, for instance, querying the graph database plant model for respective information of the graph database plant model. Moreover, a user can also utilize an input unit for indicating, for instance, which graph database plant model should be utilized such that the graph database plant model indicated by the user is received.

In a further step, a waste heat and/or a heat sink potential are then determined for at least a part of the industrial plant based on the graph database plant model and the time series data of the sensors. In particular, the information of the graph database plant model can be utilized to determine relations of sensors to parts of the industrial plant site comprising one or more specific operation assets. From this respective energy conserving and mass flow conserving equations can be derived for one or more of the operation assets of the industrial plant site but also for the complete industrial plant site. The measurement time series data of the sensors can then be utilized as input to these equations in order to determine if in one or more parts of the industrial plant site waste heat is produced or if heating could be necessary on another part of the industrial plant site. Based on the solved equations, the locations of potential waste heat and/or heat sink potentials can then be derived from the graph database, for instance, from information on the location of the respective operation asset stored in the graph database or simply by extracting an identification of a respective operation asset that provides such potential. An example how a system of equations describing the mass flow and/or temperature balance of an industrial plant site based on a graph database can be derived from a graph database can be found, for instance, in the Articles "Observability and redundancy classification in generalized process networks - I. Theorems" by A. Kretsovalis, and R. S. H. Mah, Computers & Chemical Engineering, Volume 12, Issue 7, pages 671-687 (1988) and "Observability and redundancy classification in generalized process networks - II. Algorithms" by A. Kretsovalis, and R. S. H. Mah, Computers & Chemical Engineering, Volume 12, Issue 7, pages 689-703 (1988).

In a last step, control signals are provided based on the waste heat and/or heat sink potential for optimizing an energy consumption of the industrial plant site. For example, the control signals can control a display to display to a user, for instance, an operator of the industrial plant, the locations of the determined waste heat and/or heat sink potentials and the respective potential height. Thus, an operator can, based on these display control signals, control the production processes of the industrial plant, for instance, such that waste heat is reduced or that a heat flow can be provided to a respective heat sink. Moreover, the control signals can be generated such that a maintenance control system is caused to initiate a maintenance process, for instance, indicating the installation of a heat pump in certain locations of the industrial plant. However, the control signals can also directly control a production process of the industrial plant. Preferably, the control signal comprises information on a part of the industrial plant site where waste heat is emitted and/or where a heat sink is located. Moreover, in an embodiment the control signal comprises process parameters for controlling one or more operation assets of the industrial plant to reduce waste heat identified based on the waste heat potential. In a further preferred embodiment, the control signal comprises process parameters for controlling one or more operation assets such that a determined waste heat is integrated with a determined heat sink.

In an embodiment, the method further comprises identifying in the received graph database plant model an operation node and/or transport node which is not connected via an edge to a sensor node and predicting for the identified node time series data comprising predicted sensor measurements for a predicted sensor node connected to the identified node based on time series data of sensors connected to nodes connected via one or more edges to the identified node. Since the process is performed by operation assets of an industrial plant that generally follow physical laws, it is possible utilizing these physical laws, for instance, mass flow and temperature balance laws, to predict sensor measurements of a sensor node for an operation asset based on sensors that are connected to nodes that are related to the respective operation asset or node for which the sensor measurements should be predicted. For example, if for a transportation node no measurements of a mass flow are available, these sensor measurements can be predicted utilizing mass flow measurements of sensors provided upstream and/or downstream of this transport node. Such predicted measurements for a predicted sensor node can be regarded as virtual measurements of a virtual sensor. Preferably, the sensor is a temperature and/or mass flow sensor and the predicted time series data refers to predicted temperature and/or mass flow measurements. In this case, it is then preferred the predicted time series data is predicted by determining a mass flow and energy balance for at least a part of the industrial plant site based on the time series data of sensors connected to nodes connected via one or more edges to the identified nodes.

In an embodiment, the determining of the waste heat and/or heat sink potential for at least a part of the industrial plant site comprises comparing mass flow and/or temperature time series data associated with an ingoing edge of the part of the graph database plant model associated with the part of the industrial plant site with mass flow and/or temperature time series data associated with an outgoing edge of the part of the graph database plant model associated with the part of the production plant site. This allows to determine the mass flow and heat balance and thus waste heat and/or heat sink potentials for any part of the industrial plant site. For example, this allows to determine not only whether a specific operation asset produces waste heat but also if heat might be wasted between different operation assets, for instance, during a transport of a substance from one operation asset to another operation asset. Thus, waste heat and/or heat sink potentials for an industrial plant site can be determined more accurately and also on a plurality of operation and process scales.

In a preferred embodiment, the waste heat and/or heat sink potential is determined for a predetermined operation reference time. In this case, time series data is utilized that is provided within predetermined time limits around the predetermined operation reference time, for instance, time series data that has been measured within a predetermined time before and/or after the predetermined operation reference time. This allows to avoid utilizing measurements that might be subject to changes during the operation of the industrial plant site. For example, in some cases the temperature measured at the beginning of a heat exchanger might not be constant but might change during a production cycle when producing a product or might depend on which product is produced. Thus, setting a predetermined operation reference time prevents utilizing and comparing measurements that are not related to each other due to their respective timing. Generally, the predetermined operation reference time can be chosen as any time point during the operation of the industrial plant site. Preferable, the reference time is chosen as a time during a typical operation of the industrial plant site. To determine such a typical operation reference time, for example, an operator can set the respective reference time based on his/her experience in operating the industrial plant site. In a preferred embodiment, the operation reference time is automatically determined by determining clusters for the measurement data of the time series data of one or more sensors. For example, the measurement data provided by the time series data of a sensor can be sorted based on the measurement value and based on the measurement values clusters can be determined in which the measurement values cluster around one or more values. From these clusters, respective times at which the measurements fall within the respective cluster can be derived and for each cluster respective operation reference times can be determined. In particular, it has been found by the inventors that the clusters in the measurement data of sensors generally indicate different operation states of the industrial plant site, and by utilizing an operation reference time belonging to one of these clusters and determining the waste heat and/or heat sink potential for this operation reference time, the waste heat and/or heat sink potential is determined for a respective operation state of the industrial plant site and by utilizing different respective operation reference times determined in this way the waste heat and/or heat sink potential can be determined for different, preferably all, operation states of the industrial plant site.

In a further aspect of the invention, an apparatus is presented for assisting an energy consumption optimization of an industrial plant site, wherein the industrial plant site comprises a plurality of sensors comprising mass flow and temperature sensors providing time series data, wherein the apparatus comprises one or more processors configured for a) receiving time series data from the plurality of sensors, wherein the time series data of a sensor comprises a tag identifying the sensor and a time sequence of measurements performed by the sensor, b) receiving a graph database plant model associated with the industrial plant site, wherein the graph database plant model is formed by a graph database comprising operation nodes related to operation assets of the industrial plant site, transport nodes related to a mass transport between operation assets and sensor nodes related to sensors of the industrial plant site, wherein the edges of the graph database are indicative of the relation between the different nodes of a graph database model, c) determining a waste heat and/or heat sink potential for at least a part of the industrial plant site based on the graph database plant model and the time series data of the sensors, and d) providing control signals based on the waste heat and/or heat sink potential for optimizing an energy consumption of the industrial plant.

In a further aspect of the invention, a computer program product is presented for assisting an energy consumption optimization of an industrial plant site, wherein the computer program product comprises program code means causing an apparatus as described above to carry out the method as described above.

In a further aspect of the invention, control signals are presented that are generated by a method as described above and/or the apparatus as described above.

In a further aspect of the invention, a use of the apparatus as described above for optimizing an energy consumption of an industrial plant site is presented.

It shall be understood that the method described above, the apparatus described above, and the computer program product described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the present invention will be apparent from and elucidated with reference to the embodiments described hereinafter.

### BRIEF DESCRIPTION OF THE DRAWINGS

In the following drawings:
- Fig. 1: shows schematically and exemplarily an embodiment of a system for optimizing an energy consumption of an industrial plant site,
- Fig. 2: shows schematically and exemplarily a flow chart of a method for assisting in optimizing the energy consumption of an industrial plant site,
- Fig. 3: shows schematically and exemplarily a heat exchanger as an operation asset of an industrial plant site,
- Fig. 4: shows schematically and exemplarily a graph database for an industrial plant site, and
- Figs. 5 and 6: illustrate in more detail a graph database for an exemplary industrial plant site.

### DETAILED DESCRIPTION OF EMBODIMENTS

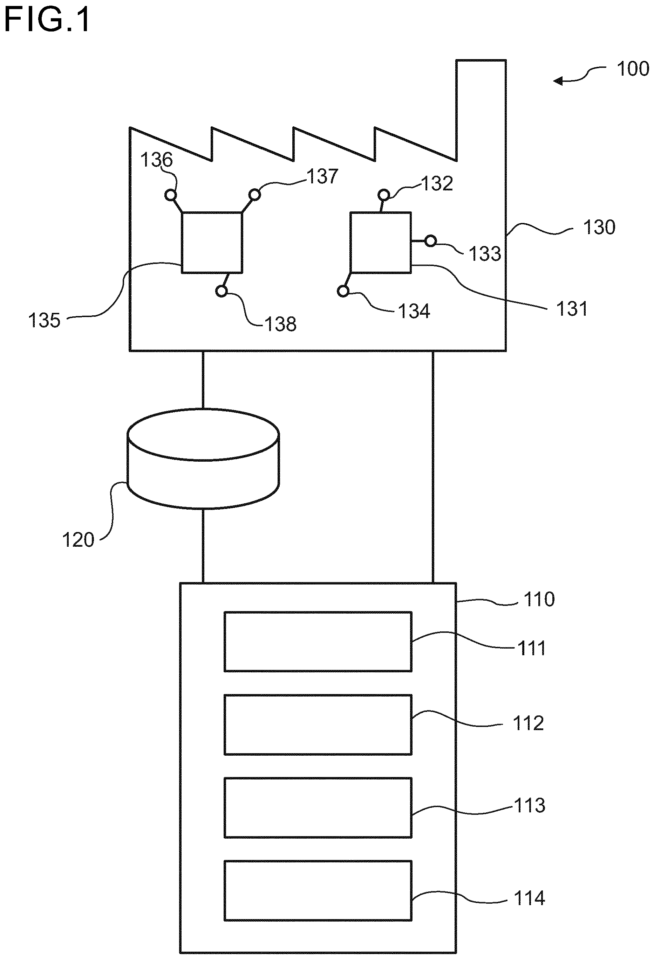

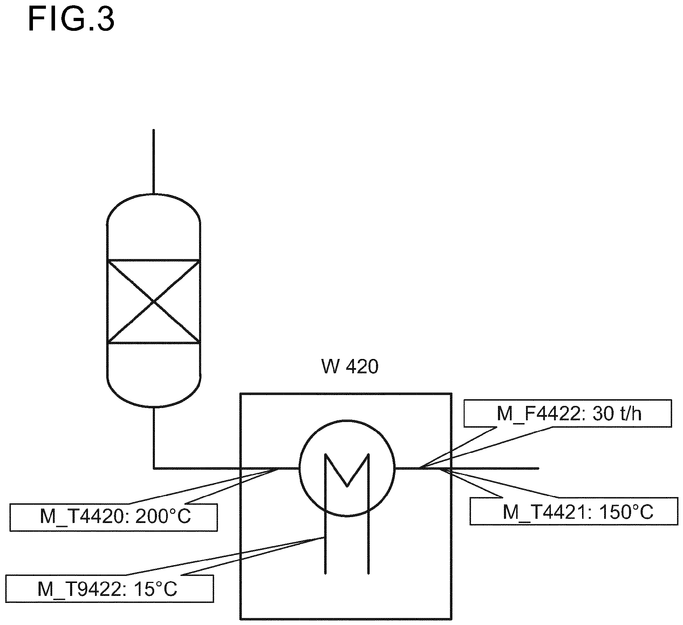

Fig. 1 shows schematically and exemplarily a system for optimizing an energy consumption of an industrial plant site. The system 100 comprises an apparatus 110 for assisting an energy consumption optimization of an industrial plant site 130. Optionally, the system 100 can further comprise a database 120 for storing time series data from the one or more sensors 132, 133, 134, 136, 137, 138 of the industrial plant site 130. Further, the system 100 can optionally comprise a control system for controlling the industrial plant site 130 that in Fig. 1 is shown as being part of the industrial plant site 130. In this schematic example, the industrial plant site 130 comprises two operation assets 131, 135 that allow the production of a chemical product. The operation assets 131, 135 can be configured for working together to produce a chemical product but can also be completely independent, for instance, each producing another chemical product. Each of the operation assets comprises or is associated with sensors measuring one or more quantities of the operation asset, preferably measuring temperatures and mass flows during an operation of the operation assets 131, 135. Preferably, one of the operation assets is a heat exchanger as exemplarily shown in Fig. 3.

Generally, the industrial plant site 130 can refer to any technical infrastructure that is used for an industrial purpose. The industrial purpose may be manufacturing or processing of one or more industrial products, i.e., a manufacturing process or a processing performed by the industrial plant site. In this example, the industrial purpose refers to the production of a specific product, preferably, a chemical product. The specific product can, for example, be any physical product such as a chemical, a biological, a pharmaceutical, a food, a beverage, a textile, a metal, a plastic, a semiconductor. Additionally or alternatively, the specific product can even be a service product such as electricity, heating, air-conditioning, waste treatment such as recycling, chemical treatment such as breakdown or dissolution, or even incineration, etc. Accordingly, the industrial plant site 130 may be one or more of a chemical plant, a process plant, a pharmaceutical plant, a fossil fuel processing facility such as an oil and/or a natural gas well, a refinery, a petrochemical plant, a cracking plant, and the like. The industrial plant site 130 can even be any of a distillery, an incinerator, or a power plant. The industrial plant site 130 can even be a combination of any of the examples given above.

For performing the production process the industrial plant site 130 comprises a technical infrastructure, for example, operation assets 131, 135 which can be controlled by control parameters implemented by a process control system into the technical infrastructure. The technical infrastructure may comprise equipment or process units forming respective operation assets such as any one or more of a heat exchanger, a column such as a fractionating column, a furnace, a reaction chamber, a cracking unit, a storage tank, a precipitator, a pipeline, a stack, a filter, a valve, an actuator, a transformer, a circuit breaker, a machinery e.g., a heavy duty rotating equipment such as a turbine, a generator, a pulverizer, a compressor, a fan, a pump, a motor, etc. Moreover, the industrial plant site 130 typically comprises a plurality of sensors 132, 133, 134, 136, 137, 138 that allow to measure operational parameters of the technical infrastructure, wherein the operational parameters are generally stored and can, for instance, be utilized by the process control system for controlling the production process in the industrial plant site 130. The operational parameters measured by the sensors may relate to various process parameters and/or parameters related to the equipment or the process units. For example, sensors may be used for measuring a process parameter such as a flowrate within a pipeline, a level inside a tank, a temperature of a furnace, a chemical composition of a gas, etc., and some sensors can be used for measuring vibration of a turbine, a speed of a fan, an opening of a valve, a corrosion of a pipeline, a voltage across a transformer, etc. The difference between these sensors cannot only be based on the parameter that they sense, but can even be based on the sensing principle that the respective sensor uses. Some examples of sensors based on the parameter that they sense may comprise: temperature sensors, pressure sensors, radiation sensors such as light sensors, flow sensors, vibration sensors, displacement sensors and chemical sensors, such as those for detecting a specific matter such as a gas. Examples of sensors that differ in terms of the sensing principle that they employ may, for example, be: piezo-electric sensors, piezoresistive sensors, thermocouples, impedance sensors such as capacitive sensors and resistive sensors, and so forth.

An industrial plant site 130 in the context of present teachings is a facility, sub-facility or infrastructure can also be part of a plurality of industrial plant sites. For example, the plurality of industrial plant site can refer to a compound of at least two industrial plant sites having at least one common industrial purpose. Specifically, a plurality of industrial plant site may comprise at least two, at least five, at least ten or even more industrial plant sites being physically and/or chemically coupled. The plurality of industrial plant sites may be coupled such that the industrial plant site forming the plurality of industrial plant sites may share one or more of their value chains, educts and/or products. The plurality of industrial plant sites may also be referred to as a compound, a compound site, a Verbund or a Verbund site. Further, the value chain production of the plurality of industrial plant sites via various intermediate products to an end product may be decentralized in various locations, such as in various industrial plant sites, or integrated in the Verbund site or a chemical park. Such Verbund sites or chemical parks may be or may comprise one or more industrial plant sites, where products manufactured in the at least one industrial plant site can serve as a feedstock for another industrial plant site. In such an embodiment with the production plant 130 being part of a plurality of production plants, a process control system of each of the industrial plant sites can be communicatively coupled or can even refer to the same process control system.

The apparatus 110 can be any dedicated or general computer comprising one or more processes configured such that the functions described in the following can be performed. In particular, in the following the functions performed by the processes of the apparatus 110 are associated with respective functional units of the apparatus 110 for a better overview. Generally, the functional units 111, 112, 113, 114 are only utilized to structure the functions performed by one or more processors of the apparatus 110 and can be performed by any computational suitable part of the apparatus 110, for instance, the functions can be performed by one or more processors of the apparatus 110. The apparatus 110 comprises a receiving unit 111, a graph database receiving unit 112, a potential determination unit 113 and a control signal providing unit 114.

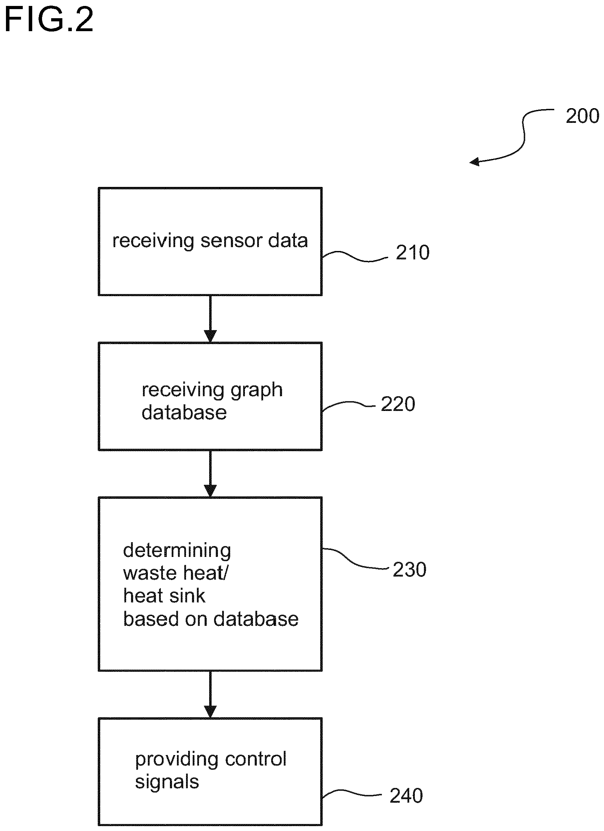

The receiving unit 111 is configured to receive time series data from a plurality of sensors of an industrial plant site. In the example shown in Fig. 2, sensors 132, 133, 134, 136, 137, 138 provide time series data, for instance, to database 120. Database 120 can be a long-term or short-term storage, for instance, can be an industrial plant historian database that documents all processes performed by the industrial plant site 130 by storing respective time series data. In such a case, a receiving can refer to accessing the database 120 and retrieving from the database the respective time series data. However, in other embodiments an input unit can be utilized, for instance, by a user, to input the respective time series data or to indicate where the time series data that should be utilized is stored, for example, on storage 120. Moreover, the time series data can also be received directly from one or more of the sensors 132, 133, 134, 136, 137, 138, for example, via a respective interface. For example, the receiving unit 111 can be realized as such an interface to the sensors 132, 133, 134, 136, 137, 138.

Time series data comprises results of measurements performed by the sensor. For example, the measurements performed by the sensor can be temperature measurements and the time series data then comprises the results of the temperature measurements. Preferably, the time series data further comprises respective time stamps that indicate when a respective measurement has been performed by the sensor. However, the time stamps can also be omitted and it can generally be known that the sensor will measure a quantity in a predetermined sequence, for instance, each minute, each hour, every 24 hours, etc. Further, the time series data can also comprise or be associated with a tag identifying the sensor such that the time series data is uniquely associated with the respective sensor.

The graph database receiving unit 112 is then configured to receive a graph database plant model associated with the industrial plant site 130. Generally, the graph database plant model is formed by a graph database comprising nodes and edges. The graph database plant model comprises in particular operation nodes, transport nodes and sensor nodes, wherein the edges are indicative of the relation between the respective nodes. For example, with respect to Fig. 1, a draft database could comprise a transport node for each operation asset 131, 135, a transport node for indicating a mass transport between the operation assets 131, 135 and six sensor nodes for each of the sensors 132, 133, 134, 136, 137, 138. Edges of the graph database would then indicate the relation between these nodes, for instance, an edge would be provided between the operation node associated with operation asset 131 and the transport node and further an edge would be provided between the transport node and the operation node associated with operation asset 135. Further, edges would also be provided between the sensor nodes and the operation nodes associated with the operation assets 131, 135 with which the respective sensors are associated. Accordingly, the graph database would comprise respective information not only about the presence of technological hardware in the industrial plant site 130 but also of the structure and respective relations between these hardware units.

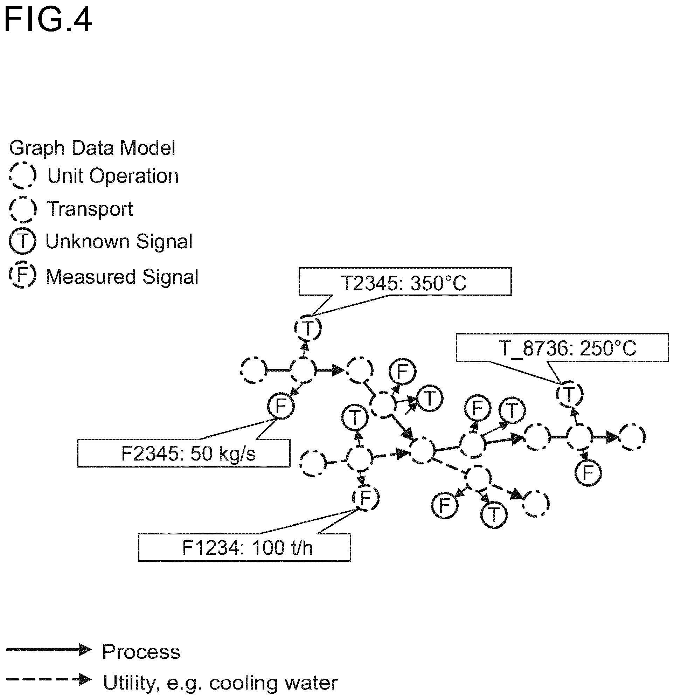

Fig. 4 shows a more general example of a possible graph database for a more complex industrial plant site. Moreover, in addition to real sensors, like the sensors shown in Fig. 1, also virtual sensors can be integrated in the graph database as indicated in Fig. 4. The measurements of these virtual sensors can then be derived from the measurements of the real sensors and the structure and knowledge provided by the graph database. For example, known physical laws like energy and mass flow balance laws can be utilized to derive the respective measurements of the virtual sensors from the actual measurements of the real sensors. Generally, such a graph database model for an industrial plant site can be created at any point in time, for example, based on knowledge of operators of the industrial plant, based on blueprints or construction information, based on installation information or maintenance information, etc. The respective graph database can then be stored, for instance, on the storage unit 120. Receiving the respective graph database can then comprise accessing database 120 in order to access the graph database, for instance, to query the graph database for respective information.

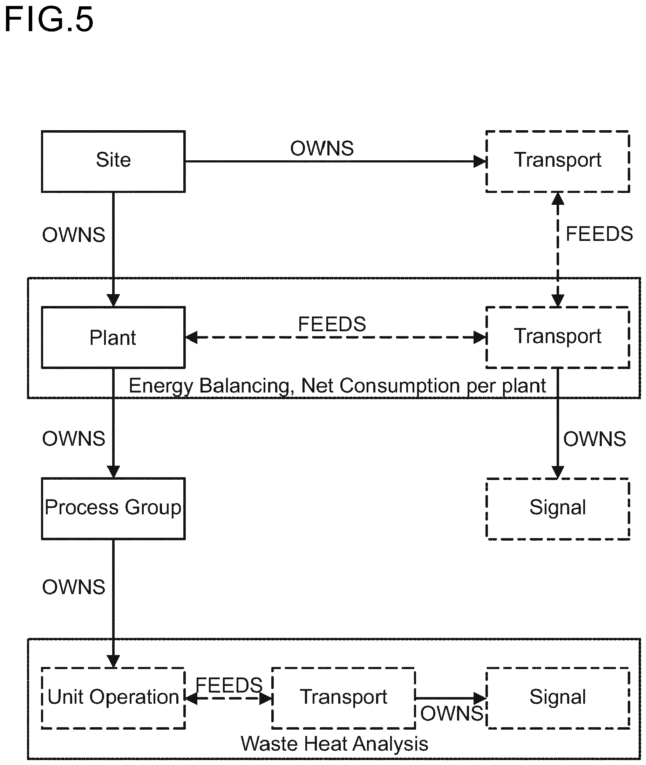

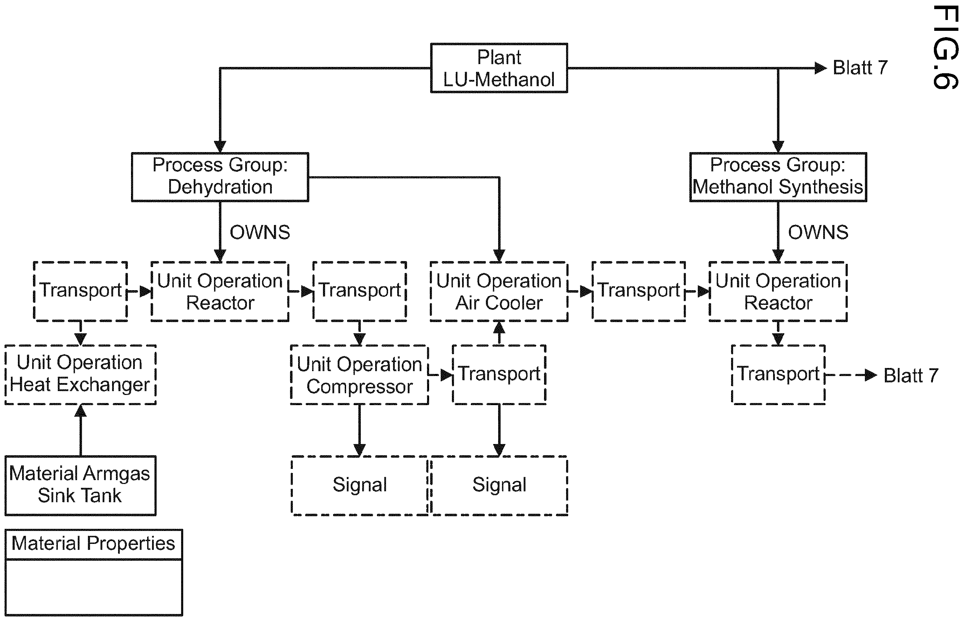

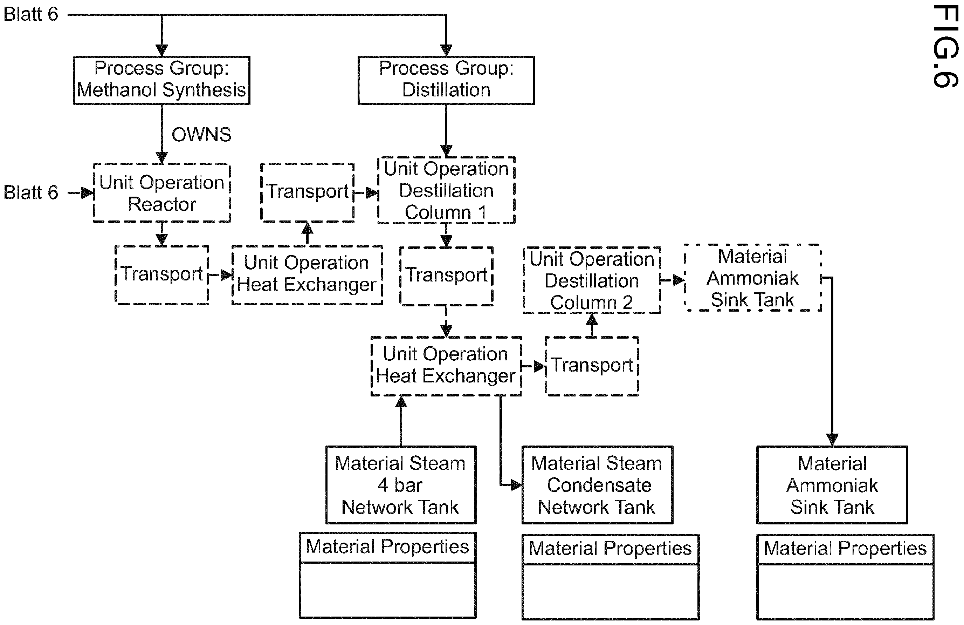

Determination unit 113 is then configured to determine a waste heat and/or heat sink potential for at least a part of the industrial plant site 130 based on the graph database plant model and the time series data of the sensors. For example, known physical laws can be utilized to set up a system of equations describing the mass flows and energy balance of at least parts of the industrial plant 130, for instance, of one of the operation assets 131, 135 or of the complete industrial plant site 130. The sensor data, in particular, the measurement data of the sensors can then be input into the equation system and the equation system can be solved with respect to determining a respective waste heat and/or heat sink potential. Further preferred embodiments and examples for the determination of the waste heat and/or heat sink potential will be described below with respect to Figs. 5 and 6.

The control signal providing unit 114 is then configured to provide control signals based on the waste heat and/or heat sink potential for optimizing an energy consumption of the industrial plant site. For example, the control signal providing unit 114 can provide the control signals to the industrial plant 130. Generally, the control signals can refer to control signals that control a display that highlights to a user operation assets of the industrial plant that provide a potential waste heat and/or heat sink. For example, on a schematic display of the industrial plant showing one or more operation assets, operation assets for which it has been identified that they might provide a waste heat source can be shown highlighted in red, wherein operation assets that can provide a heat sink can be shown in a blue color. However, also any other kind of display can be utilized to provide the user with the information on the waste heat and/or heat sink potential. The user can then utilize this information for optimizing the energy consumption of the industrial plant 130, for instance, by controlling the respective processes performed by the operation assets accordingly in particular to avoid waste heat or to integrate the waste heat with a heat sink. Moreover, the control signals can directly provide a control of the industrial plant or at least suggest respective process parameters to a user that would allow for a direct controlling of the industrial plant to reduce, for instance, waste heat in an operation asset. Depending on the process performed in the operation asset producing waste heat, the process parameter can indicate to change, for instance, a temperature of a heater, a pressure or any other parameter of the operation asset. Moreover, the control signals can be provided to a maintenance program that can then be caused to issue a maintenance protocol that allows for respective changes in the hardware of the industrial plant that allow for the reduction of waste heat or for the utilization of waste heat, for instance, to provide the waste heat to a heat sink. For example, the maintenance protocol can cause a maintenance crew to install a heat pump utilizing the waste heat of an operation asset. Moreover, the maintenance protocol can also cause a maintenance crew to configure an operation asset providing waste heat and an operation asset acting as a heat sink such that the waste heat can be utilized for heating the operation asset providing the heat sink. Thus, the apparatus 110 allows for assisting in the optimization of energy consumption of the industrial plant 130.

Fig. 2 shows schematically and exemplarily a method 200 for assisting energy consumption optimization of an industrial plant site. Generally, the method 200 can be performed as a computer program on the apparatus 110. Thus, the functions described in the following with respect to the method 200 can be realized in the same way as the functions described with respect to apparatus 110 above. In a first step 210, the method comprises a step of receiving time series data from a plurality of sensors of an industrial plant site. In a further step 220, a graph database plant model associated with the industrial plant site is received. Based on the graph database in a next step 230, a waste heat and/or heat sink potential for a respective cluster is determined based on the time series data of the sensors belonging to a part of the industrial plant site. Further, in a last step 240, control signals based on the waste heat and/or heat sink potential for optimizing an energy consumption of the industrial plant site are provided.

Generally, above an approach utilizing graph-based data modelling to enable declarative modelling of mass and energy balance for the purpose of detecting waste heat streams within production assets in a scalable, data-driven manner without manual balancing is described. In particular, mass flow and temperature measurement data mapped into a graph data model of a production network, i.e. industrial plant site, is utilized. With the help of the graph data model, mass and energy balancing can be performed automatically around each node of the graph that represents a production unit or other functional part of the industrial plant site. It has been found by the inventors that it is advantageous for developing a scalable approach in order to data-driven waste heat detection and integration to integrating domain knowledge into the waste heat determination. In particular, domain knowledge can be described a graph object, i.e. a graph data base, setting data from heterogenous data sources into a context with one another and with the domain knowledge of experts. In the following more details on a preferred embodiment of the invention as described above are provided.

In particular, the invention is based on a concept of utilizing graph-based data modelling that enables automatic mass and energy balancing at scale and at various levels of aggregation to provide transparency on waste heat assets and their possible integration options.

Preferably, a three-step approach is followed utilizing flexible levels of details in the data model. From the graph database model, respective thermodynamic equations to derive waste heat detection and integration are set up declaratively from the graph database model, and are thus scalable with no manual work load. In a first step a waste heat potential within a production network on an industrial plant site level can be determined by applying an automatic mass and energy balancing to a graph data base representing the whole industrial plant site. An energy balance gap can be determined as a proxy for a waste heat potential provided by the industrial plant site. Based on the determined energy balance gap it can be determined which operation assets in the production network are promising candidates for waste heat detection. In a second step a waste heat potential for a respective promising operation asset is calculated including a waste heat magnitude and temperature level. In particular, it can be determined which operation asset provides waste heat and an estimation of the heat flow magnitude and temperature level for the operation asset can be provided. In a third step the energy consumption of the industrial plant site can be optimized, by matching determined heat sinks and waste heat sources, for example, by integrating heat sinks and sources into a value chain model or utilize heat flows and heat integration technologies, like heat pumps, as optimization variables and/or degree of freedom in the operation of the industrial plant site.

Generally, conventional approaches to mapping the data structures of industrial plant site and utilizing the respective sensor data for energy optimization often fail due to the lack of context of the data sets and features to each other. For example, the available sensors measurement data provides continous time series data of mass flows and temperatures within the process. This is the explicitly existing information in the data. However, no information exists here about the relationship of the measurements to each other. For example, a measurement in the context of the plant might have a higher added value because we can deduce additional information about the process based on the context. Thus, the above method allows to utilize this context in an easy, resource sensitive and readily available way to integrate the available time series data for the energy optimization.

The above described steps of a preferred embodiment are described in the following in more detail with respect to Figs. 5 and 6. In the first step of the embodiment a graph database model is utilized to derive mass and energy balances in an automatic manner for an industrial plant site. An example for such a graph database model on an industrial plant site level is shown in Fig. 5. The graph database model describes preferably how data of mass and utility flows into and out of the industrial plant site are connected with each other, by positioning as graph nodes with edges into and out of the respective industrial plant site node. Attached to these so-called transport nodes on the edges, property data such as the heating value of a material or the energy content of a utility flow can be stored. For running a mass or energy balance, the advantages of a graph data model can be leveraged by querying for all ingoing edges and subtract the mass flows on all outgoing edges to receive a balance equation equivalent to the first law of thermodynamics. The same process can also be applied to all industrial plant sites in a production network or compount so that a metric of waste heat potential for each industrial plant site can be derived and can be updated when new data is available, e.g. every day/month.

In the second step the goal is to have a more detailed look at the promising industrial plant sites and/or operation assets detected in the first step. Therefore one level of detail deeper of the graph database model can be utilized, as shown exemplarily in Fig. 6 for a methanol producing plant. At this level the graph database model contextualizes the plant measurement data in the context of the chemical process run by the respective industrial plant site. Based on the contextualized measurement data, i.e. the graph data base of the industrial plant site, also missing mass flows and temperatures can be deduced form known measurements based on mass and energy balances. For example, an implementation of the observability algorithm as described in the Articles "Observability and redundancy classification in generalized process networks - I. Theorems" by A. Kretsovalis, and R. S. H. Mah, Computers & Chemical Engineering, Volume 12, Issue 7, pages 671-687 (1988) and "Observability and redundancy classification in generalized process networks - II. Algorithms" by A. Kretsovalis, and R. S. H. Mah, Computers & Chemical Engineering, Volume 12, Issue 7, pages 689-703 (1988) can be utilized to calculate missing measurements and also to calculate mass flows and temperatures. In particular, based on the equation system of mass and energy balance, the missing but observable variables can be calculated in a reconciliation problem, where the error between calculate and measured, optionally, redundant variables is minimized. With the help of the measurements if available including the calculated missing measurements the magnitude and temperature level of heat flows within the process network can be calculated utilizing for example, the following equation: *Q* = (*mcₚ*) ∗ Δ*T,* wherein *Q* is the heat, *m* the mass of the transported material, *cₚ* the specific heat capacity, Δ*T* the temperature difference.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the receiving of the sensor data, the receiving of the graph database, the determining of the waste heat potential, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, main-frame computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

## Claims

1. A computer implemented method for assisting an energy consumption optimization of an industrial plant site, wherein the industrial plant site (130) comprises a plurality of sensors (132, 133, 134, 136, 137, 138) comprising mass flow and temperature sensors providing time series data, wherein the method (200) comprises:
receiving (210) time series data from the plurality of sensors (132, 133, 134, 136, 137, 138), wherein the time series data of a sensor comprises a tag identifying the sensor and a time sequence of measurements performed by the sensor,
receiving (220) a graph database plant model associated with the industrial plant site, wherein the graph database plant model is formed by a graph database comprising operation nodes related to operation assets of the industrial plant site, transport nodes related to a mass transport between operation assets and sensor nodes related to sensors of the industrial plant site, wherein the edges of the graph database are indicative of the relation between the different nodes of a graph database model,
determining (230) a waste heat and/or heat sink potential for at least a part of the industrial plant site based on the graph database plant model and the time series data of the sensors, and
providing (240) control signals based on the waste heat and/or heat sink potential for optimizing an energy consumption of the industrial plant (130).

2. The method according to claim 1, wherein the method further comprises identifying in the received graph database plant model an operation node and/or transport node which is not connected via an edge to a sensor node and predicting for the identified node time series data comprising predicted sensor measurements for a predicted sensor node connected to the identified node based on time series data of sensors connected to nodes connected via one or more edges to the identified node.

3. The method according to claim 2, wherein the sensor is a temperature and/or mass flow sensor and the predicted time series data refers to predicted temperature and/or mass flow measurements.

4. The method according to claim 3, wherein the predicted time series data is predicted by determining a mass flow and energy balance for at least a part of the industrial plant site based on the time series data of sensors connected to nodes connected via one or more edges to the identified nodes.

5. The method according to any of the preceding claims, wherein the determining of the waste heat and/or heat sink potential for at least a part of the industrial plant site comprises comparing mass flow and/or temperature time series data associated with an ingoing edge of the part of the graph database plant model associated with the part of the industrial plant site with mass flow and/or temperature time series data associated with an outgoing edge of the part of the graph database plant model associated with the part of the production plant site.

6. The method according to any of the preceding claims, wherein the control signal comprises information on a part of the industrial plant site where waste heat is emitted and/or where a heat sink is located.

7. The method according to any of the preceding claims, wherein the control signal comprises process parameters for controlling one or more operation assets of the industrial plant to reduce waste heat identified based on the waste heat potential.

8. The method according to any of the preceding claims, wherein the control signal comprises process parameters for controlling one or more operation assets such that a determined waste heat is integrated with a determined heat sink.

9. An apparatus for assisting an energy consumption optimization of an industrial plant site, wherein the industrial plant site comprises a plurality of sensors comprising mass flow and temperature sensors providing time series data, wherein the apparatus (110) comprises one or more processors configured for:
receiving time series data from the plurality of sensors, wherein the time series data of a sensor comprises a tag identifying the sensor and a time sequence of measurements performed by the sensor,
receiving a graph database plant model associated with the industrial plant site, wherein the graph database plant model is formed by a graph database comprising operation nodes related to operation assets of the industrial plant site, transport nodes related to a mass transport between operation assets and sensor nodes related to sensors of the industrial plant site, wherein the edges of the graph database are indicative of the relation between the different nodes of a graph database model,
determining a waste heat and/or heat sink potential for at least a part of the industrial plant site based on the graph database plant model and the time series data of the sensors, and
providing control signals based on the waste heat and/or heat sink potential for optimizing an energy consumption of the industrial plant.

10. A computer program product for assisting an energy consumption optimization of an industrial plant site, wherein the computer program product comprises program code means causing an apparatus according to claim 9 to carry out the method according to any of claims 1 to 8.

11. Control signals generated by a method according to any of claims 1 to 8 and/or the apparatus according to claim 9.

12. Use of the method according to any of claims 1 to 8 and/or the apparatus according to claim 9 for optimizing an energy consumption of an industrial plant site.
